# NEW EUROPEAN PATENT SPECIFICATION

(11) **EP 2 838 355 B2**
(45) Date of publication and mention of the opposition decision: **15.03.2023**
(45) Mention of the grant of the patent: 08.05.2019
(21) Application number: 13713558.8
(22) Date of filing: 14.03.2013
(51) Int. Cl.: A01K 5/02, A01F 25/20

(54) **FEED GRIPPING DEVICE**
VORRICHTING ZUM ERGREIFEN VON FUTTER
DISPOSITIF POUR SAISIR DE LA NOURRITURE

(30) Priority: 20.04.2012 NL 2008675
(43) Date of publication of application: 25.02.2015
(73) Proprietor: Lely Patent N.V., 3147 PB Maassluis (NL)
(72) Inventor: VAN KUILENBURG, Jan Martinus, NL-3147 PA Maassluis (NL)
(74) Representative: Octrooibureau Van der Lely N.V.
(86) International application number: PCT/NL2013/050178
(87) International publication number: WO 2013/157931

(56) References cited:
- EP-A1- 2 232 982
- EP-A2- 1 452 087
- EP-B1- 2 129 214
- DE-A1- 3 921 871

## Description

The invention relates to a feed gripping device for gripping feed from a feed storage location containing one or more piles of feed, and comprising a frame and a grab bucket carrier which is displaceable with at least one horizontal degree of freedom with respect to said frame, as well as a grab bucket which is vertically displaceable with respect to the grab bucket carrier, furthermore comprising at least one sensor which is operatively connected to the gripping device and is arranged to determine a value of at least one parameter which relates to at least one pile of feed at the feed storage location, as well as a control unit which is operatively connected to the gripping device and the sensor and which is arranged to control the gripping device on the basis of the measured value of the parameter.

In the prior art, EP2129214 discloses a device for gripping and displacing material. This device is provided with content-determining means for determining the weight and/or the volume of the material present in, for example, a milking robot feeding location and for emitting a quantity or weight signal, respectively, to the control means. This appears to relate to determining a stock of material. Furthermore, the disclosed device or assembly appears to comprise predetermined information regarding the height distribution and/or the volume of the material, as well as a comparator which is arranged to compare the image of the material obtained by a sensor with the predetermined information. Thus, it is for example possible to determine whether material has been removed or added. According to a further feature of the known device, the control means thereof are activated automatically by the signals emitted by the aforementioned sensor, in such a manner that, if there is a difference in height of the material to be gripped, the material which is at the highest or almost at the highest level is gripped first and/or the material is dumped in the location where the level is at the lowest or almost at the lowest level. Therefore, control takes place on the basis of a parameter value relating to a pile of feed, but only to determine the location where gripping takes place.

It is a drawback of this known device that, in practice, it does not supply the feed to the user in a sufficiently efficient and accurate manner. This may lead to the rations fed to the animals being too inaccurate, resulting in a relatively large amount of rotting or non-consumed feed, or in insufficient feed or feed of an undesirable composition being fed. In any case, feeding of the animals therefore does not take place in an optimum manner.

In the prior art, EP2232982 discloses a device for cutting silage. This device is provided with a laser scanner which obtains data representing the form of the front part of a silage pile. The system also includes dosing data which indicate how much silage is required from the silage pile. Starting from the form data and the dosing data, cutting position data are calculated representing a cutting position of the silage cutter frame, such that a calculated amount of silage between the cutting trajectory of the silage cutter associated with the calculated cutting position and an outer surface portion of the front part of the silage pile represented by the form data equals the amount of silage represented by the dosing data.

It is an object of the present invention to improve the prior art devices mentioned in such a manner that a more accurate provision of feed can be ensured.

This object is achieved by the invention by means of a device according to Claim 1, in particular a feed gripping device for gripping feed from a feed storage location containing one or more piles of feed, and comprising a frame and a grab bucket carrier which is displaceable with at least one horizontal degree of freedom with respect to said frame, as well as a grab bucket which is vertically displaceable with respect to the grab bucket carrier, furthermore comprising at least one sensor which is operatively connected to the gripping device and is arranged to determine a value of at least one parameter which relates to at least one pile of feed at the feed storage location, as well as a control unit which is operatively connected to the gripping device and the sensor and which is arranged to control the gripping device on the basis of the measured value of the parameter, wherein the control unit is arranged to determine and set, on the basis of the measured value of the parameter, a grabbing depth with respect to the at least one pile of feed, at which grabbing depth the control unit makes the grab bucket grab feed from the pile and , the control unit contains stored information which links the grabbing depth to be set to the desired amount of feed to be grabbed, in particular to its mass or weight, and the control unit is arranged to update the information on the basis of the measured weight of the grabbed feed and the associated set grabbing depth.

The gripping device is thus provided which has the advantage that it is possible to dynamically take changing circumstances into account. After all, it is not only the changing shape of a pile of feed, with the associated height information which is measured and processed by the control unit, which may after all affect the actual amount of feed which is ultimately grabbed. A changing density, for example, due to grabbing or other changing circumstances such as drying, ageing, collapsing, etc. may also have an effect which can be processed. Thus, changes due to admixing or removing feed or any other relevant information is thus made available to the control unit. Due to the measured weight of the grabbed feed being passed on, the latest and most accurate information is always available for determining and setting the grabbing depth. Preferably, the weight relates to the weight of an unloaded part, and more preferably the part collected in a collecting location, of the grabbed feed, as this provides even more accurate information. Updating may then comprise replacing the existing information with the new information, for example, by scaling up a standard graph on the basis of a new set of values (weight, grabbing depth). It is also possible to take a running average or weighted average or use any other suitable method of updating. In an embodiment, updating takes place every time the grab bucket has grabbed feed. After all, due to the digging and the like of the grab bucket the density, the profile, etc., of the feed may also change when the grab bucket grabs, but has to unload again prematurely because the weight is too low or too high.

Such information stored, may comprise, for example, a density function, a grabbed volume as a function of the grabbing depth, the type of feed, etc. Incidentally, the information may be regarded as having been stored if it is available at the point in time when the grabbing depth is to be calculated or set. This may be information which is collected or obtained only a short time beforehand, but also, for example, information which may be regarded as a standard setting, for example, in case the feed gripping device always has to grab the same type of feed, etc. Thus, the control unit is arranged to set the grabbing height by means of the stored information as well as the obtained value(s) of the parameter(s), and obviously the desired amount of feed. Advantageously, the control unit is arranged to receive or calculate a desired amount of feed to be grabbed. Based on this, the control unit is then able to determine the required grabbing depth from information about the type of feed, density, etc. In addition, the control unit may of course receive a "hard" instruction regarding a grabbing depth, optionally in the form of an absolute grabbing height.

It should be stressed here that setting a grabbing depth is to be seen as equal to setting of a volume to be grabbed. Since there is a one-to-one relationship between a grabbed volume and the grabbing depth associated with said grabbing operation, means that setting one also sets the other. Obviously, the one-to-one relationship itself may depend once more on the type of feed, for example, because a liquid behaves differently from a coarse-crumbly or long-stemmed material when filling the grab bucket, but it is the correlation between grabbing depth and volume to be grabbed which is the point here.

The gripping device which is thus provided measures a parameter of the pile of feed, the value thereof being used to predetermine to which depth the grab bucket has to dig into the pile of feed. Thus, it is possible to grab a desired amount of feed in a much more reliable and reproducible manner. A further advantage is the fact that this device will grab a(n almost) perfect amount of feed much more often. As a result thereof, less of a mess is made of the feed, and the remaining feed can be kept in its original compact shape, such as a bale or block, for longer. This in turn has the effect that the feed is better protected against rotting. Yet another advantage is the fact that the device, by more often grabbing the correct amount of feed, has a greater and/or more reliable capacity, since the grab bucket does not have to go to a feed-unloading point so often, at least not unnecessarily. Due to the fact that it is now possible to choose an amount in a much more targeted manner, it will be simple to ensure that only the minimum number of "rides" is made to said feed-unloading point.

It should be noted here that the feed gripping device may be unmanned and autonomous, which obviously offers advantages in terms of saving in labour. Nevertheless, even with feed gripping devices operated by humans, the present invention can still offer advantages, in particular in accurately grabbing a desired amount of feed. In addition, the term "pile" in this case comprises any accumulation, such as a trough, stack, heap or bale of the feed. Furthermore, the vertical displacement of the grab bucket does not mean that it moves only upwards and downwards at right angles, but it may also be displaceable obliquely, provided there is a vertical component to the movement. Obviously, a purely vertical movement may be advantageous, for example due to the fact that control thereof is simple.

Advantageous embodiments and aspects of the invention are described in more detail in the dependent claims.

In particular, the parameter is or comprises absolute and/or relative height information relating to the pile of feed. In this case, the expression absolute height information is understood to mean height information with respect to a fixed point, and in particular to the ground or floor. By collecting, for example, the height information of the pile of feed with respect to the ground, i.e. absolute height information, it is also possible to determine a grabbing depth by adapting the level of the grab bucket during grabbing to the absolute height information. The expression relative height information is understood to mean height information without an absolute reference. For example, a local point of contact which is reached when the grab bucket is lowered onto the pile of feed may be used as a starting point. By then grabbing deeper until the desired grabbing depth is reached, it is also possible to achieve the invention, but in this case without knowing the absolute height of the pile of feed. Incidentally, for the reason mentioned and described here, "grabbing depth" will be considered identical to "grabbing height" below. By collecting such height information, it is possible to provide quantity information about the pile of feed, at least a part of which is to be grabbed, in an efficient and accurate manner. In addition, these are parameters which can be measured relatively easily and accurately, as will be explained further below. Nevertheless, other parameters are not excluded, such as the weight of the pile which can be measured by a local weighing device situated under the pile or by a counting device in the case of a pile of countable feed. In particular, the type of feed in the pile is also very important in order to determine which grabbing depth is required for a desired amount of feed. However, this parameter does not vary greatly.

Advantageously, the parameter comprises at least one of the following: the height of the pile, the local height of the pile vertically underneath the grab bucket, the average height of the pile, the local average height of the pile vertically underneath the grab bucket, at least one 1-dimensional height profile of the pile, and a 2-dimensional height profile of the pile. In this case, "vertically underneath the grab bucket" in fact means "in line with the movement of the grab bucket" which, after all, does not have to move downwards completely at right angles, as has been mentioned. It would also be possible to say "within reach of the grab bucket", obviously after the latter has moved sufficiently far towards the pile, so that the spatial dimensions of the grab bucket with respect to the pile of feed are included. After all, the local height of the pile in a location outside the reach of the grab bucket will be irrelevant to the operation of said grab bucket. In addition, a "1-dimensional height profile" or "2-dimensional height profile" in the present application means a height profile as a function of 1 coordinate or of 2 coordinates, respectively, in which case the profile itself obviously relates to a surface in the space, namely the external surface of the pile of feed.

The parameters mentioned here can be used more specifically to predetermine the amount of feed to be grabbed. For example, if the local, optionally average, height of the pile of feed underneath the grab bucket is known, this can result in more accurate gripping results than if only a (greatest) height thereof is used. In turn, if the height profile is known in 1 dimension and better still in 2 dimensions, this will yield even more accurate results, since knowledge of the complete distribution and/or the volume of the pile situated underneath, again optionally and preferably underneath the grab bucket, will make it possible to estimate the amount of feed which has actually been grabbed very accurately.

Advantageously, the parameter comprises height information as a function of the horizontal position of the grab bucket with respect to the pile of feed. After all, the height may vary across the pile of feed, so that locally different absolute heights or grabbing depths are necessary in order to grab a desired amount of feed. It should be noted that a 1-dimensional profile provides such height information as a function of the position, in which case a 2-dimensional profile may be viewed as "a 1-dimensional profile in a first direction as a function of a second, different direction".

In embodiments, the at least one sensor comprises a height meter and/or distance meter. Using such types of sensors, it is not only possible to measure the parameter, but it is, if desired, also possible to determine the grabbing depth. It should be noted that the grabbing depth can in this case be regarded as the height at which the grab bucket grabs. This grabbing height corresponds to, at least is associated with, a desired grabbing depth in the pile of feed. This means that when a specific grabbing height has to be set, it is possible to achieve exactly the same by setting an associated grabbing depth in the pile of feed. As has already been described above, all this is only a matter of the point of reference which is chosen: a grabbing height refers more to an absolute height, such as above ground level, while a grabbing depth refers more to the surface of the pile of feed itself. Nevertheless, what is meant in this instance is that the grab bucket has to dig into the pile of feed over a certain adjustable distance. This difference in approach may be useful depending on the sensor which is used in order to provide height information and on the position where this is located. Thus, it is possible, for example, to determine the height position of a grab bucket with respect to the frame, and thus with respect to the floor, i.e. absolute, in a simple manner using a tension wire sensor or another sensor. All this will be explained below in more detail.

Examples of the abovementioned sensor are also a laser distance meter or feeler or the like. These are able to provide the desired height information in a simple but accurate manner, in particular information relating to a relative height, such as distance between sensor and (local or global) height of the pile of feed.

Alternatively or additionally, the at least one sensor comprises a 3D sensor. Such a 3D sensor can provide a spatial image of, for example, the height profile of the pile of feed in one go, and preferably substantially in real time, from which the desired height information can be taken. Examples of such 3D sensors are 3D cameras and ultrasound sensors, in each case with image-processing means to convert the signals received by the 3D sensor into the desired image, at least into the desired information. It should be noted that with such 3D sensors as well, scanning or measuring during or after displacement may be advantageous. Not only is it thus possible to measure even large feeding stations efficiently and more quickly, but it is also possible to obtain a more reliable measurement of one and the same pile of feed, for example, if the image is covered for some reason. In particular the higher scanning speed is an advantage, since this makes it possible to monitor which feeding stations need to be cleaned in a very efficient and dynamic way. Consequently, no time is lost at the start of the cleaning operation with determining which feeding station(s) has have to be cleaned. During displacement of the grab bucket carrier, the 3D camera can nevertheless scan one or more feeding stations and collect the associated information, such as the height profile. Processing of the information may be carried out during further operations, such as grabbing of feed, so that the computed, processed information is almost immediately ready for a large number, if not all, feeding stations.

There are no particular limitations with regard to the location where the sensor(s) is (are) provided. Nevertheless, in embodiments at least one of the at least one sensor is provided at the feed storage location or the frame. The sensor is therefore arranged in a fixed position. Thus, it is in particular possible to reliably carry out absolute height measurements without frequent calibration for a relatively long period of time. The sensor is then, for example, arranged on a separately provided pillar or frame or on the frame of the feed gripping device. The latter frame is, for example, a frame of an overhead crane or, if the feed gripping device comprises a crane which can be displaced in its entirety, a guide along which the feed gripping device is displaceable.

Alternatively or additionally, and advantageously, at least one of the at least one sensor is provided on at least one of the grab bucket carrier and the grab bucket. This offers the advantage that the sensor, and in particular a measuring or image field thereof, is directed towards and situated close to the pile of feed to be measured. Thus, very accurate measurements are possible which are not or hardly affected by other piles of feed or obstacles which hamper or prevent a measurement or which render the latter inaccurate due to an excessive measuring distance. In addition, it is thus possible to carry out each measurement under the same conditions, such as measuring distance and angle. If the sensor is arranged on the grab bucket carrier, then the information obtained can still be regarded as being reasonably reliable absolute height information. If this sensor is built into, attached onto or on the grab bucket, the sensor in principle provides relative height information. If an additional sensor is provided which determines the height position of the grab bucket with respect to a fixed reference point, such as the frame or the ground, the height information provided by the sensor arranged on the grab bucket may, if desired, again be regarded as absolute information after conversion. It is also advantageous if the control unit of the device is arranged on the grab bucket carrier and/or the grab bucket, at least advantageously in a substantially fixed position with respect to the sensor. Because the distance between the sensor and the control unit is then also fixed, very few, if any, communication problems will occur between the sensor and the control unit, which improves the reliability compared to an arrangement with variable distance.

In advantageous embodiments, at least one of the at least one sensor, in particular the height/distance meter, is arranged to repeatedly measure a local height. This relates in particular to the repeated measuring during a single grabbing operation or grab bucket displacement operation, in order thus to be able to measure the desired parameter more accurately. In particular, said sensor is furthermore arranged to determine a 1-dimensional or 2-dimensional height profile of the pile of feed therefrom, more particularly during horizontal displacement of the grab bucket(/carrier).

In embodiments, the control unit and/or at least one of the at least one sensor is arranged to determine a parameter value for several piles of feed. This means that the feed gripping device, for example, not only measures the pile of feed from which feed is taken. Thus, the device may also collect height information for one or more, optionally adjacent, piles of feed, and optionally store it internally or externally. This renders a subsequent grabbing operation quicker as the relevant information is then already available. However, since more time passes between such a measurement and a subsequent grabbing operation, this measurement may possibly be less reliable. In that case, it is advisable to use this feature in particular when the piles of feed which are to be measured will hardly undergo any change. This will be the case, in particular if one or more new supplies of feed have been provided, as these will still be relatively compact and will hardly change in shape or density if at all, but also if the type of feed hardly changes intrinsically, as is the case with dense and relatively heavy, granular types, such as maize.

In embodiments, the information comprises a function or table, wherein the control unit is arranged to provide or calculate an associated grabbing height on the basis of the information for the desired amount of feed. In this case, the function or table may also be a program or logic circuit etc. with a corresponding function. In particular, the function or table is a density function or table which provides the density of the feed, at least of the pile. This density may itself also be a function of another variable or, in other words, be variable. Thus, the moisture content may have a great influence, as does the feed type itself, but also the compactness thereof. After all, the latter may change generally or locally in the pile of feed, inter alia as a result of previous grabbing operations and the like. By thus providing information about the density, a very reliable and accurate feed gripping device can be provided.

In advantageous embodiments, the feed gripping device comprises a weighing sensor which is operatively connected to the control unit for determining the weight of a grabbed amount of feed. It is possible, on the basis of the actually grabbed feed, of which the weighing sensor determines the weight, to check if the feed gripping device works sufficiently accurately, and to accurately compose the actual ration. After all, it will often be the case that a ration is composed of several grabs, optionally per type of feed, so that any inaccuracy can be corrected after a previous grab by a subsequent adjusted grab of feed. In this case, "weight" comprises the term "mass", the two being essentially equivalent on earth.

It may be advantageous if the grab bucket and/or the grab bucket carrier comprises the weighing sensor. Such a weighing sensor may be a load cell, spring (scale), etc. In this way, the weight of the grabbed amount of feed can be determined very directly. For example, if the grab bucket or grab bucket carrier comprises a meter which measures an electrical parameter of a hoisting motor relating to the hoisting capacity, the control unit can therefrom determine the weight of the grab bucket in a known manner, and thus the amount grabbed feed. In this case, it is also possible to take into account the weight of the hoisting cable, hoisting chain or the like, as this after all changes during hoisting. However, the, or a, weighing sensor may also be arranged in another location, such as underneath the feed position/pile of feed, as long as it is able to determine the weight of the grabbed feed and send it to the control unit. In the latter example, this may be achieved by means of a difference measurement. An advantage of the embodiments in this paragraph is the fact that the actual weight which is grabbed is determined and not the theoretical weight which should have been grabbed. This prevents more feed from hanging from the grab bucket or less feed being grabbed than would have fitted in the grab bucket. By offering the possibility of weighing after gripping, i.e. to weigh the grabbed feed, these deviations can be taken into account. Partly as a result thereof, the invention is very useful overall for fine-grained feed, such as maize, flour, pulp, brewer's grain and the like, although it can also readily be used for long-stemmed feed.

In embodiments, the weighing sensor and/or the control unit is arranged to continue weighing the weight until the moment of unloading, in particular until after unloading. In this way, it is possible to determine even more accurately the weight of the feed which is being unloaded or which has been unloaded. After all, it is possible that the grab bucket loses some of the grabbed feed on the way, for example, feed which hangs from the grab bucket. To this end, the weighing sensor and/or the control unit is, for example, arranged to detect a change in weight and, in particular, to determine it and to send a value of the change in weight to the control unit. Furthermore, it may be possible that not all of the grabbed feed is unloaded from the grab bucket or, for example, does not end up at the desired location, but, for example, next to a feed-collecting container. Therefore, determining the weight of feed which ultimately ends up on or in the desired location is advantageous, although this may require each of these locations, such as containers, to have a separate weighing sensor.

As has already been indicated above, a particular embodiment is characterized by the fact that the control unit is arranged to make the grab bucket unload the grabbed feed again on the pile if the measured weight of the grabbed feed deviates from the desired amount of feed by more than a predetermined amount. This measure efficiently prevents a grabbed amount of feed from actually being grabbed at a correctly set grabbing depth, but containing (much) too much or too little feed due to unforeseen circumstances. This could occur if too much feed is left hanging on the grab bucket, but also if, for example, there is a malfunction. The grab bucket then unloads the feed back at the feed position and carries out another grabbing operation. In this case, (height) information can be collected again in order to improve the grabbing operation. In addition, the information stored in the control unit can be updated and the grabbing depth can be determined again on the basis of the newly determined (height) information and the stored information. The control unit can furthermore be arranged to emit an alarm signal if a predetermined number of successive attempts do not yield a suitable amount of feed, i.e. within the margins.

The invention furthermore relates to an assembly of the feed gripping device according to the invention and a feed-collecting container, wherein the control unit and grab bucket carrier are arranged to displace, by means of the control unit, the grab bucket with the grabbed feed until it is situated above the feed-collecting container and to unload the grabbed feed into the feed-collecting container by the grab bucket. This assembly provides a feeding system which can dispense one or more types of feed very accurately, i.e. a ration, to a feed-collecting container. Although the feed gripping device according to the invention could, in itself, also function as feeding device for animals by dispensing the grabbed feed directly to the animals to be fed, it is advantageous to collect the grabbed feed in a feed-collecting container. This not only makes it possible to use several feed-collecting containers, but also ensures that the grab bucket does not have to come near the animals to be fed, which is much safer. After all, the feed-collecting container with the collected feed can itself also be moved again to the animals to be fed. To this end, the feed-collecting container may be displaceable, unmanned and/or autonomous or also manned with an operator. Examples are a feed-mixing wagon, autonomous or attached to a tractor or the like, and a lorry or simple wheelbarrow. All these feeding systems may benefit from the improved accuracy offered by the present invention, as described for the feed gripping device.

In embodiments, the feed-collecting container comprises a feed-weighing device which is operatively connected to the control unit of the feed gripping device and is arranged to determine the weight of the feed unloaded into the collecting container and to send a signal relating to said weight to the control unit. Advantageously, the control unit, i.e. of the feed gripping device, is arranged to update the information on the basis of the signal received, in particular the weight received. As has already been described above, it is advantageous to weigh the feed which has actually been collected in the collecting container. Thus, a great degree of accuracy is achieved with regard to the amount of feed which was actually collected and which is to be used later. By connecting the weighing device or sensor of the collecting container to the control unit of the feed gripping device, and by updating the information in the control unit with the measured weight, it is possible to achieve the advantages with regard to accuracy mentioned above in connection with the feed gripping device in this case as well.

The invention will now be explained in more detail with reference to the drawing which shows a number of non-limiting exemplary embodiments, in which:
Fig. 1 diagrammatically shows an assembly according to the invention;
Fig. 2 shows an example of a 1-dimensional measured height profile;
Fig. 3 shows an example of a 2-dimensional measured height profile;
Fig. 4 shows an example of a weight/grabbing height diagram;
Fig. 5a diagrammatically shows a pile of feed prior to the first grabbing operation; and
Figs. 5b and 5c diagrammatically show two examples of the pile of feed after the first grabbing operation.

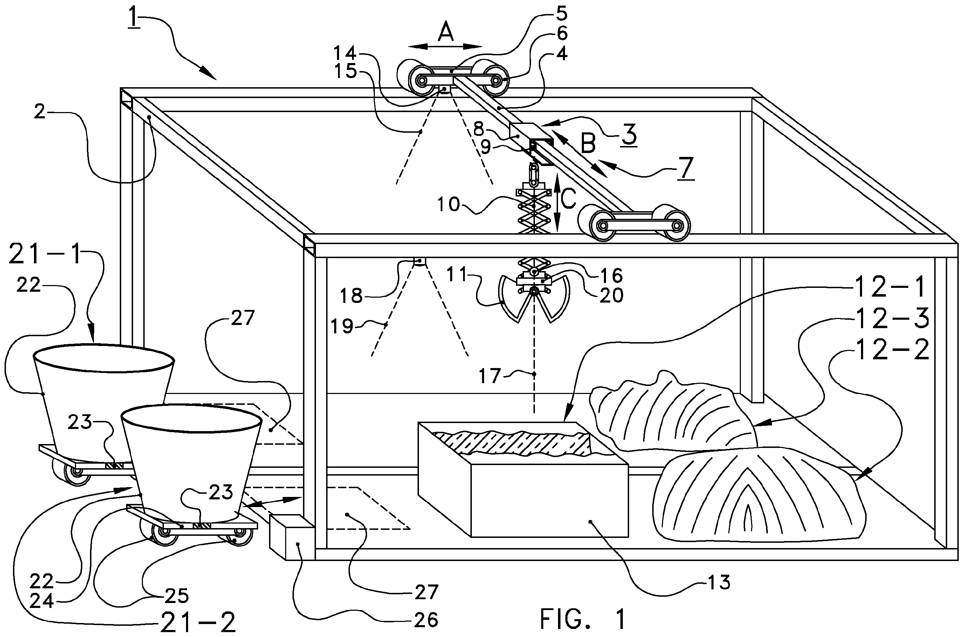

Fig. 1 diagrammatically shows an assembly according to the invention. This comprises a feed gripping device according to the invention which is denoted overall by reference numeral 1. The feed gripping device 1 comprises a frame 2 with a grab bucket carrier which can be moved along the latter and which is denoted overall by reference numeral 3. Reference numeral 4 denotes a cross beam which can be displaced in the direction of the double arrow A by means of the longitudinal trolley 5 on wheels 6. Reference numeral 8 denotes a hoisting unit with transverse running wheels 9, and which can move in the direction of the double arrow B. The hoisting unit 8 comprises a hoisting cable 10 from which a grab bucket 11 hangs. Furthermore, reference numerals 12-1, 12-2 and 12-3 denote three piles of feed, with pile 12-1 being situated in a container 13.

In addition, a few examples of sensors are shown: a first sensor 14 with a first image field 15, a laser height sensor 16 with a laser beam 17 and a second sensor 18 with a second image field 19. Reference numeral 20 denotes a gripper weighing sensor.

Furthermore, a feed-collecting device 21-1 is shown, comprising a feed-collecting container 22 with a weighing sensor 23. Reference numeral 21-2 denotes an autonomously displaceable feed vehicle which also comprises a feed-collecting container 22 and a weighing sensor 23, and also a chassis 24 with drive wheels 25. A control unit is denoted by reference numeral 26.

The illustrated feed gripping device 1 is, for example, arranged as an overhead crane wherein the grab bucket 11 is displaceable in three directions A, B and C. In this way, the grab bucket 11 can be placed above any desired pile of feed 12-1, 12-2 or 12-3, at an associated feed position, with any other number obviously also being possible. By lowering the grab bucket 11 into the pile of feed, the former can pick up feed. Then, the picked-up feed can be unloaded into one of the feed-collecting devices 21-1 or 21-2 by moving the grab bucket 11 there by means of the longitudinal trolley 5 and the transverse trolley 7 and opening the bucket. All this can take place under the control of the control unit 26 which, although it is shown here as a single unit, may also be provided in distributed form. In this case, the communication may in each case take place via cables or also by wireless means or similar. Incidentally, it may be advantageous to arrange the control unit, at least a part for the grab bucket thereof, on the grab bucket 11 or the grab bucket carrier 3 or to allow it to ride along with the grab bucket carrier when the latter is displaced.

By means of the gripper weighing sensor 20, the grab bucket 11 or the control unit 26 can determine whether a useful amount of feed has been collected from the pile of feed. To this end, the measured amount of feed has to correspond, within certain margins, to the desired amount of feed. Should this not be the case, then the grab bucket 11 can drop the feed back onto the pile by opening up and then making a renewed attempt. If the amount of feed corresponds, within the predetermined margins, with the desired amount of feed, then this feed can be transferred to the feed-collecting device 21-1 or -2, as has already been stated. These preferably, but not necessarily, also contain a weighing sensor 23. This may serve to detect the amount of feed which has actually been collected, as it is possible that feed may have fallen from the grab bucket 11 during the displacement thereof. In particular fine-grained feed or powder will often flow out of the grab bucket 11 via gaps, whereas in particular with long-stemmed feed, such as hay or straw, part of the feed which often hangs from the grab bucket may have been dropped on the way. Overall, the actual amount of feed which is collected in the collecting container 22 may deviate significantly from the amount of feed in the grab bucket 11 which was weighed originally. It should be noted that the gripper weighing sensor 20 may comprise, for example, a spring (scale), strain gauge or load cell. However, alternatively or additionally, a weighing device may also be provided for example which measures a lifting torque or current for hoisting the filled grab bucket 11 in order to determine the total weight therefrom and consequently the weight of the amount of feed carried.

A value of a parameter of at least one of the piles of feed 12-1 - 12-3 is determined. This may be achieved using one of the sensors 14, 16, 18. For example, a height of the pile of feed may be determined using a laser height sensor 16 which is moved across the pile of feed using a laser beam 17 and thus determines a 1-dimensional height profile. This may be achieved by moving the grab bucket carrier 3 to which the laser height sensor 16 is attached in a direction A and/or B across the respective pile of feed. If desired, this may be repeated once or several times in order to obtain more information about the height profile of the pile of feed.

Alternatively, a sensor is used which is attached to, for example, the longitudinal trolley 5. This comprises a similar laser height sensor or, for example, a 3D camera which has a first image field 15. By means of such a 3D camera, it is possible to obtain a 2-dimensional height profile of a pile of feed in one attempt. By displacing the grab bucket carrier 3 in the direction A, the first sensor 14 can be positioned above a desired pile of feed. This sensor may be slightly limited in the direction B, but is situated substantially out of reach of the piles of feed, and in particular of any dust or the like emanating therefrom.

Alternatively and/or additionally, a second sensor 18 is provided, such as an ultrasound sensor, with a second image field 19. Here, this is attached to the frame 2. Obviously, this second sensor is limited in terms of flexibility in its range, but it does have the advantage that it does not have any moving parts, at least does not have to have any. Alternatively, said second sensor may, for example, be arranged to swivel so that it can still scan several different piles of feed.

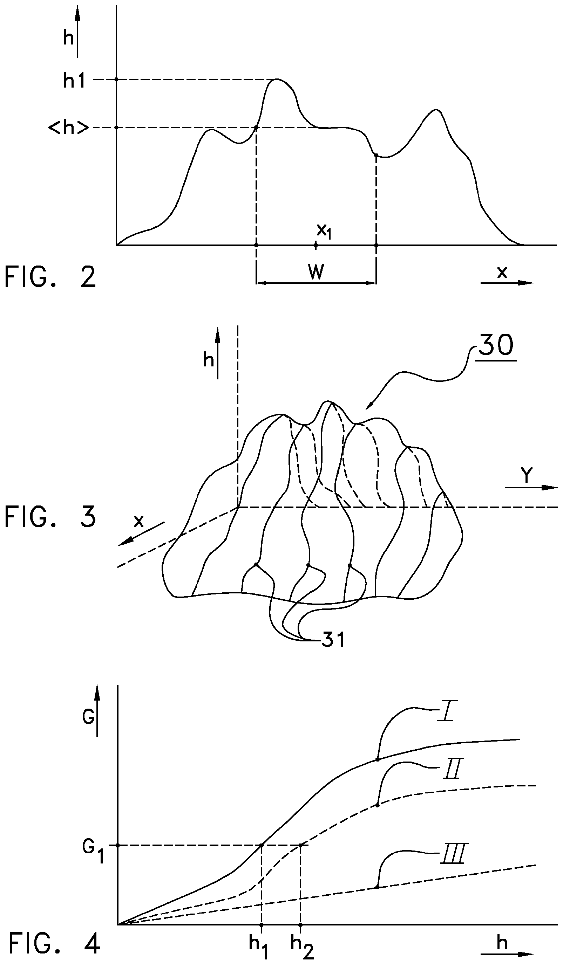

The operation of the feed gripping device 1 and of the assembly with the feed-collecting devices 21 will now be explained in more detail with reference to Figs. 2-5.

Fig. 2 shows an example of a 1-dimensional measured height profile. This profile comprises the height H as a function of the position X. This diagram may, for example, have been obtained by moving the respective sensor across the associated pile of feed and repeatedly determining the height. The term "the height" of the pile of feed may, for example, refer to the maximum height H₁. It may also refer to the average height, for example, within reach of the grab bucket 11 at the location of the local position X₁. This range is indicated by the double arrow W and the average height is determined as <H>. This average height may, for example, be determined by the control unit on the basis of the measured height profile or in any other known manner.

Fig. 3 shows an example of a 2-dimensional measured height profile 30. This profile is composed of a number of profile lines 31. These profile lines may, for example, have been obtained by some parallel scans of a pile of feed, for example, in the manner from Fig. 2. Alternatively, it is possible to obtain the profile 30 in one attempt using a 3D camera, ultrasound sensor or the like. It should be noted that the illustrated lines indicate that the pile of feed partly overhangs which is an indication of long-stemmed feed, such as hay. Maize or the like will not exhibit this overhang.

Fig. 4 shows an example of a weight/grabbing height diagram. On the basis of data in the literature and/or of data obtained with the feed gripping device in practice, such weight/grabbing height diagrams can be produced for one or more types of feed. In this case, the weight of the picked-up amount of feed is determined for a number of different grabbing heights. Such diagrams are, for example, (obviously) dependent on the intrinsic density of the feed, but also on, for example, the shape of the gripper, etc.

It should be noted that, generally, in the present application, the term "grabbing height" is in fact understood to mean the grabbing depth with respect to the (local) height of the pile of feed. In other words, the grabbing height ultimately indicates how far the feed gripping device has to dig into the pile of feed. By way of example, a diagram I is shown for a first grab action from a still regular and compact pile of hay, such as a bale. Due to the compacting of the bale, diagram I already shows a relatively large weight for a relatively small height.

Diagram II shows an identical diagram for a bale from which a few bites have already been taken. Due to these bites, in particular the top layer will have been pulled slightly apart, so that it has a lower density and so that maybe less material will hang from the gripper. Consequently, this diagram results in a lower weight at the same height as diagram I. Conversely, at the same desired weight G₁, the diagram I will have a smaller height H₁ (that is to say the penetration depth below the (optionally local) height of the pile of feed) than diagram II. In the diagram, this is indicated by height H₁ and H₂, respectively.

Incidentally, it can be seen that the shape of the diagrams I and II is nonlinear, which, for example, can be caused by different behaviour of the feed when hanging from the gripper, and certainly also by the shape of the gripper. Alternatively, diagram III shows a feed type in which the weight does depend linearly on the height, as is the case, for example, with a substantially square bucket and a fine-grained type of feed.

It is important to note that this diagram, either I or II or any diagram at all, according to the invention is in fact a dynamic diagram. For each new grabbing operation, associated with a desired amount of feed, a grabbing height H is set. The measured weight value associated with said grabbing height H can then be fed back as a new point of the weight/grabbing height function. In this case, it is possible to scale up the function immediately according to the new pair of coordinates (grabbing height, weight), but it is also possible to start from a set of such pairs of coordinates which, for example, have been collected in the past. Adding a new pair of coordinates will then possibly cause an adjustment of the diagram/the function. Alternative ways of feeding back a measured couple of values (height, weight) is also possible according to any other known mathematical technique. The biggest advantage of this adjustment is of course the fact that the accuracy of grabbing a desired amount of feed can be significantly increased for new grabbing operations.

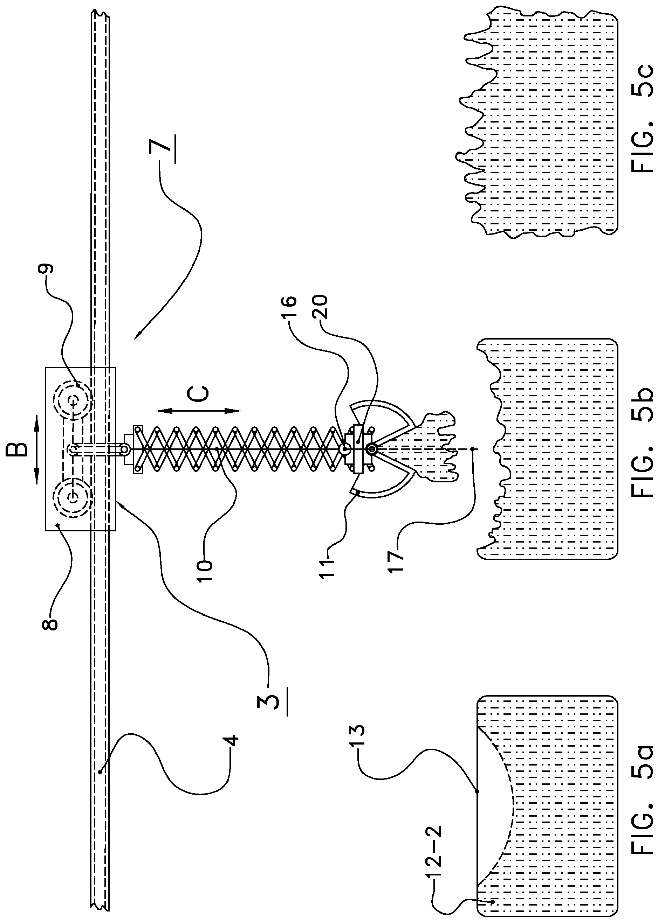

Fig. 5a diagrammatically shows a pile of feed prior to the first grabbing operation and Figs. 5b and 5c show two diagrammatical examples of the pile of feed after the first grabbing operation. These examples serve to indicate how grabbing can change the character of the pile of feed. For example, Fig. 5a shows a square bale of hay. The dotted line indicates which part of the bale of hay should be grabbed according to an associated weight/height diagram in order to pick up the desired amount of hay.

As can be seen in Fig. 5b, the gripper 11 pulls an amount of hay from the bale, in which case however a relatively large amount of hay is pulled from the bale and still protrudes from the bottom of the bucket. Thus, the amount of hay which has been grabbed will have a much larger weight than intended. Incidentally, it is possible to set an adjusted grabbing height for the future on the basis hereof, which already takes into account the amount of protruding hay.

In Fig. 5b, the remaining pile of hay still has a density which is slightly similar to the initial density. However, this density may also be greatly reduced by grabbing operations, in particular if, on at least one occasion, a pile of hay has been too heavy, as a result of which it has been dumped again by the grab bucket. A (n diagrammatic) example thereof can be seen in Fig. 5c, where the pile of hay has a greater volume than the initial volume, even after the removal of an amount of hay therefrom. It will be clear that a different weight/grabbing height diagram will apply to the pile of hay which has been broken into than for the initial pile of hay. The invention is able to take this into account by dynamically adjusting the weight/grabbing height diagram by means of the current measurements.

## Claims

1. Feed gripping device (1) for gripping feed from a feed storage location containing one or more piles of feed (12-1, 12-2, 12-3), and comprising
a frame (2) and a grab bucket carrier (3) which is displaceable with at least one horizontal degree of freedom with respect to said frame, as well as a grab bucket (11) which is displaceable vertically with respect to the grab bucket carrier,
furthermore comprising at least one sensor (14, 16, 18) which is operatively connected to the gripping device and is arranged to determine a value of at least one parameter which relates to at least one pile of feed at the feed storage location, as well as a control unit (26) which is operatively connected to the gripping device and the sensor and which is arranged to control the gripping device on the basis of the measured value of the parameter, **characterized in that** the control unit is arranged to determine and set, on the basis of the measured value of the parameter, a grabbing depth with respect to the at least one pile of feed, the control unit making the grab bucket grab feed from the pile with that grabbing depth and **in that** the control unit contains stored information which links the grabbing depth to be set to the desired amount of feed to be grabbed, in particular to its mass or weight, in particular in dependence on the type of feed and **in that** the control unit is arranged to update the information on the basis of the measured weight of the grabbed feed and the associated set grabbing depth, preferably of the weight of an unloaded part of the grabbed feed, and more particularly after each time the grab bucket has grabbed feed.

2. Feed gripping device according to Claim 1, wherein the parameter is or comprises absolute and/or relative height information relating to the pile of feed.

3. Feed gripping device according to Claim 2, wherein the parameter comprises at least one of the following:
- the height of the pile,
- the local height of the pile vertically underneath the grab bucket,
- the average height of the pile,
- the local average height of the pile vertically underneath the grab bucket,
- at least one 1-dimensional height profile (31) of the pile, and
- a 2-dimensional height profile (30) of the pile.

4. Feed gripping device according to one of the preceding claims, wherein the at least one sensor comprises a height meter (14, 16, 18) and/or distance meter (14, 16, 18).

5. Feed gripping device according to Claim 4, wherein the at least one sensor comprises a 3D sensor.

6. Feed gripping device according to one of the preceding claims, wherein at least one of the at least one sensor is provided at the feed storage location or the frame.

7. Feed gripping device according to one of the preceding claims, wherein at least one of the at least one sensor is provided on at least one of the grab bucket carrier and the grab bucket.

8. Feed gripping device according to one of the preceding claims, wherein at least one of the at least one sensor is arranged to repeatedly measure a local height, in particular furthermore arranged to determine a 1-dimensional (31) or 2-dimensional height profile (30) of the pile of feed therefrom, more particularly during horizontal displacement of the grab bucket carrier.

9. Feed gripping device according to one of the preceding claims, wherein at least one of the at least one sensor is arranged to determine a parameter value for several piles of feed.

10. Feed gripping device according to one of the preceding claims, wherein the information comprises a function or table, wherein the control unit is arranged to provide or calculate an associated grabbing depth on the basis of the information for the desired amount of feed.

11. Feed gripping device according to one of the preceding claims, comprising a weighing sensor (20) which is operatively connected to the control unit for determining the weight of a grabbed amount of feed.

12. Feed gripping device according to Claim 11, wherein the grab bucket and/or the grab bucket carrier comprises the weighing sensor.

13. Feed gripping device according to Claim 11 or 12 wherein the weighing sensor and/or the control unit is arranged to continue weighing the weight until the grabbed feed is unloaded, in particular until after the grabbed feed has been unloaded.

14. Feed gripping device according to one of the preceding claims wherein the control unit is arranged to make the grab bucket unload the grabbed feed again on the pile if the measured weight of the grabbed feed deviates from the desired amount of feed by more than a predetermined amount.

15. Assembly of the feed gripping device (1) according to one of the preceding claims and a feed-collecting container (21-1, 21-2, 22), wherein the control unit and grab bucket carrier are arranged to displace, by means of the control unit, the grab bucket with the grabbed feed until it is situated above the feed-collecting container and to unload the grabbed feed into the feed-collecting container by the grab bucket.

16. Assembly according to Claim 15, wherein the feed-collecting container comprises a feed-weighing device (23) which is operatively connected to the control unit of the feed gripping device and is arranged to determine the weight of the feed unloaded into the collecting container and to send a signal relating to said weight to the control unit.

17. Assembly according to Claim 16, wherein the control unit is arranged to update the information on the basis of the signal received.

## Patentansprüche

1. Futtergreifvorrichtung (1) zum Greifen von Futter von einem Futterlagerort, der einen oder mehrere Haufen an Futter (12-1, 12-2, 12-3) enthält, und umfassend
einen Rahmen (2) und einen Greiferkübelträger (3), welcher mit mindestens einen horizontalen Freiheitsgrad bezüglich des Rahmens verschiebbar ist, sowie einen Greiferkübel (11), welcher bezüglich des Greiferkübelträgers vertikal verschiebbar ist,
weiterhin umfassend mindestens einen Sensor (14, 16, 18), welcher betriebsfähig mit der Greifvorrichtung verbunden ist und angeordnet ist, um einen Wert mindestens einen Parameters zu bestimmen, welcher sich auf mindestens einen Haufen an Futter am Futterlagerort bezieht, sowie eine Steuereinheit (26), welche betriebsfähig mit der Greifvorrichtung und dem Sensor verbunden ist und welche angeordnet ist, um die Greifvorrichtung auf der Grundlage des gemessenen Werts des Parameters zu steuern,
**dadurch gekennzeichnet, dass**
die Steuereinheit angeordnet ist, um auf der Grundlage des gemessenen Werts des Parameters eine Greiftiefe bezüglich des mindestens einen Haufens an Futter zu bestimmen und einzustellen, wobei die Steuereinheit den Greiferkübel dazu veranlasst, Futter von dem Haufen mit dieser Greiftiefe zu greifen, und
dadurch, dass die Steuereinheit gespeicherte Informationen enthält, welche die einzustellende Greiftiefe mit der gewünschten Menge an aufzugreifenden Futter verbindet, insbesondere mit dessen Masse oder Gewicht, insbesondere in Abhängigkeit vom Typ des Futters, und
dadurch, dass die Steuereinheit angeordnet ist, um die Informationen auf der Grundlage des gemessenen Gewichts des aufgegriffenen Futters und der zugeordneten eingestellten Greiftiefe, vorzugsweise des Gewichts eines abgeladenen Teils des aufgegriffenen Futters, und ganz besonders nach jedem Mal, nachdem der Greiferkübel Futter aufgegriffen hat, zu aktualisieren.

2. Futtergreifvorrichtung nach Anspruch 1, wobei der Parameter eine absolute und/oder relative Höheninformation bezüglich des Haufens an Futter ist oder diese umfasst.

3. Futtergreifvorrichtung nach Anspruch 2, wobei der Parameter mindestens eines der Folgenden umfasst:
- die Höhe des Haufens,
- die lokale Höhe des Haufens vertikal unterhalb des Greiferkübels,
- die durchschnittliche Höhe des Haufens,
- die lokale durchschnittliche Höhe des Haufens vertikal unterhalb des Greiferkübels,
- mindestens ein 1-dimensionales Höhenprofil (31) des Haufens, und
- ein 2-dimensionales Höhenprofil (30) des Haufens.

4. Futtergreifvorrichtung nach einem der vorstehenden Ansprüche, wobei der mindestens eine Sensor einen Höhenmesser (14, 16, 18) und/oder einen Abstandsmesser (14, 16, 18) umfasst.

5. Futtergreifvorrichtung nach Anspruch 4, wobei der mindestens eine Sensor einen 3D-Sensor umfasst.

6. Futtergreifvorrichtung nach einem der vorstehenden Ansprüche, wobei mindestens einer des mindestens einen Sensors am Futterlagerort oder am Rahmen vorgesehen ist.

7. Futtergreifvorrichtung nach einem der vorstehenden Ansprüche, wobei mindestens einer des mindestens einen Sensors am Greiferkübelträger und/oder am Greiferkübel vorgesehen ist.

8. Futtergreifvorrichtung nach einem der vorstehenden Ansprüche, wobei mindestens einer des mindestens einen Sensors angeordnet ist, um eine lokale Höhe wiederholt zu messen, insbesondere weiterhin angeordnet ist, um ein 1-dimensionales (31) oder 2-dimensionales Höhenprofil (30) des Haufens an Futters davon, ganz besonders während der horizontalen Verschiebung des Greiferkübelträgers, zu bestimmen.

9. Futtergreifvorrichtung nach einem der vorstehenden Ansprüche, wobei mindestens einer des mindestens einen Sensors angeordnet ist, um einen Parameterwert für mehrere Haufen an Futter zu bestimmen.

10. Futtergreifvorrichtung nach einem der vorstehenden Ansprüche, wobei die Informationen eine Funktion oder Tabelle umfassen, wobei die Steuereinheit angeordnet ist, um eine zugeordnete Greiftiefe auf der Grundlage der Informationen für die gewünschte Menge an Futter bereitzustellen oder zu berechnen.

11. Futtergreifvorrichtung nach einem der vorstehenden Ansprüche, umfassend einen Wiegesensor (20), welcher betriebsfähig mit der Steuereinheit zum Bestimmen des Gewichts einer aufgegriffenen Menge an Futter verbunden ist.

12. Futtergreifvorrichtung nach Anspruch 11, wobei der Greiferkübel und/oder der Greiferkübelträger den Wiegesensor umfasst.

13. Futtergreifvorrichtung nach Anspruch 11 oder 12, wobei der Wiegesensor und/oder die Steuereinheit angeordnet ist, um das Wiegen des Gewichts fortzusetzen, bis das aufgegriffene Futter abgeladen ist, insbesondere bis nachdem das aufgegriffene Futter abgeladen worden ist.

14. Futtergreifvorrichtung nach einem der vorstehenden Ansprüche, wobei die Steuereinheit angeordnet ist, um den Greiferkübel dazu zu veranlassen, das aufgegriffene Futter wieder auf den Haufen abzuladen, wenn das gemessene Gewicht des aufgegriffenen Futters von der gewünschten Menge an Futter um mehr als eine vorbestimmte Menge abweicht.

15. Anordnung der Futtergreifvorrichtung (1) nach einem der vorstehenden Ansprüche und eines Futtersammelbehälters (21-1, 21-2, 22), wobei die Steuereinheit und der Greiferkübelträger angeordnet sind, um mittels der Steuereinheit den Greiferkübel mit dem aufgegriffenen Futter zu verschieben, bis er sich über dem Futtersammelbehälter befindet, und das aufgegriffene Futter in den Futtersammelbehälter durch den Greiferkübel abzuladen.

16. Anordnung nach Anspruch 15, wobei der Futtersammelbehälter eine Futterwiegevorrichtung (23) umfasst, welche betriebsfähig mit der Steuereinheit der Futtergreifvorrichtung verbunden ist und angeordnet ist, um das Gewicht des Futters, das in den Sammelbehälter abgeladen wird, zu bestimmen und ein Signal bezüglich des Gewichts an die Steuereinheit zu senden.

17. Anordnung nach Anspruch 16, wobei die Steuereinheit angeordnet ist, um die Informationen auf der Grundlage des empfangenen Signals zu aktualisieren.

## Revendications

1. Dispositif de saisie de fourrage (1) destiné à saisir du fourrage depuis un emplacement de stockage de fourrage contenant un ou plusieurs tas de fourrage (12-1, 12-2, 12-3), et comprenant
un cadre (2) et un support de benne preneuse (3) qui est déplaçable avec au moins un degré de liberté horizontal par rapport audit cadre, ainsi qu'une benne preneuse (11) qui est déplaçable verticalement par rapport au support de benne preneuse,
comprenant en outre au moins un capteur (14, 16, 18) qui est fonctionnellement relié au dispositif de saisie et est configuré pour déterminer une valeur d'au moins un paramètre qui est lié à au moins un tas de fourrage au niveau de l'emplacement de stockage de fourrage, ainsi qu'une unité de commande (26) qui est fonctionnellement reliée au dispositif de saisie et au capteur et qui est configurée pour commander le dispositif de saisie sur la base de la valeur mesurée du paramètre,
**caractérisé en ce que**
l'unité de commande est configurée pour déterminer et régler, sur la base de la valeur mesurée du paramètre, une profondeur de saisie par rapport à l'au moins un tas de fourrage, l'unité de commande faisant saisir à la benne preneuse du fourrage depuis le tas avec cette profondeur de saisie
et **en ce que** l'unité de commande contient des informations stockées qui relient la profondeur de saisie à régler à la quantité souhaitée de fourrage à saisir, en particulier à sa masse ou son poids, en particulier en fonction du type de fourrage et
**en ce que** l'unité de commande est configurée pour actualiser les informations sur la base du poids mesuré du fourrage saisi et de la profondeur de saisie réglée associée, de préférence du poids d'une partie déchargée du fourrage saisi, et plus particulièrement après chaque fois que la benne preneuse a saisi du fourrage.

2. Dispositif de saisie de fourrage selon la revendication 1, dans lequel le paramètre est ou comprend des informations de hauteur absolue et/ou relative liées au tas de fourrage.

3. Dispositif de saisie de fourrage selon la revendication 2, dans lequel le paramètre en comprend au moins un des suivants :
- la hauteur du tas,
- la hauteur locale du tas verticalement sous la benne preneuse,
- la hauteur moyenne du tas,
- la hauteur locale moyenne du tas verticalement sous la benne preneuse,
- au moins un profil de hauteur unidimensionnel (31) du tas, et
- un profil de hauteur bidimensionnel (30) du tas.

4. Dispositif de saisie de fourrage selon une des revendications précédentes, dans lequel l'au moins un capteur comprend un appareil de mesure de hauteur (14, 16, 18) et/ou un appareil de mesure de distance (14, 16, 18).

5. Dispositif de saisie de fourrage selon la revendication 4, dans lequel l'au moins un capteur comprend un capteur 3D.

6. Dispositif de saisie de fourrage selon une des revendications précédentes, dans lequel le ou au moins un des capteurs est disposé au niveau de l'emplacement de stockage de fourrage ou du cadre.

7. Dispositif de saisie de fourrage selon une des revendications précédentes, dans lequel le ou au moins un des capteurs est disposé sur le support de benne preneuse et/ou la benne preneuse.

8. Dispositif de saisie de fourrage selon une des revendications précédentes, dans lequel le ou au moins un des capteurs est configuré pour mesurer de façon répétée une hauteur locale, en particulier également configuré pour déterminer un profil de hauteur unidimensionnel (31) ou bidimensionnel (30) du tas de fourrage à partir de celle-ci, plus particulièrement pendant un déplacement horizontal du support de benne preneuse.

9. Dispositif de saisie de fourrage selon une des revendications précédentes, dans lequel le ou au moins un des capteurs est configuré pour déterminer une valeur de paramètre pour plusieurs tas de fourrage.

10. Dispositif de saisie de fourrage selon une des revendications précédentes, dans lequel les informations comprennent une fonction ou une table, l'unité de commande étant configurée pour fournir ou calculer une profondeur de saisie associée sur la base des informations pour la quantité souhaitée de fourrage.

11. Dispositif de saisie de fourrage selon une des revendications précédentes, comprenant un capteur de pesée (20) qui est fonctionnellement relié à l'unité de commande pour déterminer le poids d'une quantité saisie de fourrage.

12. Dispositif de saisie de fourrage selon la revendication 11, dans lequel la benne preneuse et/ou le support de benne preneuse comprennent le capteur de pesée.

13. Dispositif de saisie de fourrage selon la revendication 11 ou 12, dans lequel le capteur de pesée et/ou l'unité de commande sont configurés pour continuer à peser le poids jusqu'à ce que le fourrage saisi soit déchargé, en particulier jusqu'à un moment après que le fourrage saisi a été déchargé.

14. Dispositif de saisie de fourrage selon une des revendications précédentes, dans lequel l'unité de commande est configurée pour faire décharger à la benne preneuse le fourrage saisi de nouveau sur le tas si le poids mesuré du fourrage saisi s'écarte de plus d'une quantité prédéterminée de la quantité souhaitée de fourrage.

15. Montage du dispositif de saisie de fourrage (1) selon une des revendications précédentes et d'un récipient de collecte de fourrage (21-1, 21-2, 22), dans lequel l'unité de commande et le support de benne preneuse sont configurés pour déplacer, au moyen de l'unité de commande, la benne preneuse avec le fourrage saisi jusqu'à ce qu'elle soit située au-dessus du récipient de collecte de fourrage et pour décharger le fourrage saisi dans le récipient de collecte de fourrage par la benne preneuse.

16. Montage selon la revendication 15, dans lequel le récipient de collecte de fourrage comprend un dispositif de pesée de fourrage (23) qui est fonctionnellement relié à l'unité de commande du dispositif de saisie de fourrage et est configuré pour déterminer le poids du fourrage déchargé dans le récipient de collecte et pour envoyer un signal lié audit poids à l'unité de commande.

17. Montage selon la revendication 16, dans lequel l'unité de commande est configurée pour actualiser les informations sur la base du signal reçu.
